# EUROPEAN PATENT SPECIFICATION

(11) **EP 4 049 820 B1**
(45) Date of publication and mention of the grant of the patent: **13.11.2024**
(21) Application number: 22158603.5
(22) Date of filing: 24.02.2022
(51) Int. Cl.: B29C 45/02, B29C 45/27, B29C 45/53, B29C 45/14, H02K 15/12, B29C 45/38, B29L 31/34, B29L 31/00

(54) **ROTOR MANUFACTURING APPARATUS**
ROTORHERSTELLUNGSVORRICHTUNG
APPAREIL DE FABRICATION DE ROTOR

(30) Priority: 25.02.2021 JP 2021028632
(43) Date of publication of application: 31.08.2022
(73) Proprietor: Nidec Corporation, Kyoto-shi, Kyoto 601-8205 (JP)
(72) Inventor: TAKENAKA, Akira, Kyoto, 601-8205 (JP); IWATA, Koichi, Kyoto, 601-8205 (JP); TSUJI, Hideki, Kyoto, 601-8205 (JP); TANAKA, Yosuke, Kyoto, 601-8205 (JP)
(74) Representative: Stöckeler, Ferdinand

(56) References cited:
- JP-A- 2014 091 220
- JP-A- 2019 161 850
- US-A1- 2014 131 919
- US-A1- 2019 315 027

## Description

### Technical Field

The present invention relates to a rotor manufacturing apparatus.

### Background Art

A rotor manufacturing apparatus is known in which a magnet accommodated in an accommodating hole of a rotor body is fixed with resin. For example, Patent Literature 1 discloses a resin sealing apparatus as a manufacturing apparatus for a rotor laminated iron core serving as a rotor body, the resin sealing apparatus including upper and lower molds in a plate-like shape sandwiching the rotor laminated iron core, a plurality of pots for accommodating resin pellets, and a plurality of plungers for extruding melted resin inside the respective pots to the outside.

The upper mold in the resin sealing apparatus of Patent Literature 1 is supported by a frame of the resin sealing apparatus. The upper mold includes the plurality of pots that are a plurality of vertical through-holes. The plurality of plungers are located above the upper mold. The plurality of plungers are configured to be movable vertically in the respective pots. The plurality of plungers move downward in the respective pots to extrude melted resin in the respective pots to the outside. The lower mold is located below the upper mold. The lower mold is configured to be movable vertically. The lower mold moves upward to sandwich the rotor laminated iron core mounted on the lower mold between the upper mold and the lower mold.

The upper mold is provided on its side to be in contact with the rotor laminated iron core with a plurality of flow paths into which the melted resin in the respective pots flows. When the rotor laminated iron core is sandwiched between the upper mold and the lower mold, the plurality of flow paths allows the plurality of pots to communicate with respective accommodating holes of the rotor laminated iron core.

When resin is filled into the accommodating holes of the rotor laminated iron core by using the resin sealing apparatus, the resin melted in the plurality of pots is extruded into the respective flow paths by the corresponding plungers. The resin extruded is poured into each of the plurality of accommodating holes of the rotor laminated iron core. The resin filled into the plurality of accommodating holes solidifies in the plurality of accommodating holes to fix magnets in the respective accommodating holes.

JP 2014 091220 A discloses a resin molding apparatus comprising a mobile mold. The mobile mold comprises a pot block on which a pot is formed and which possesses a first heater in a state where mold runners linking sprues are being formed thereon, and a mobile block for preheating a plunger via a second heater.

US 2014/131919 A1 teaches a method for manufacturing a laminated iron core. A laminated iron core body including a permanent magnet inserted into a magnet-insert hole is arranged between a molding die and a holding die. A cull plate is arranged between the molding die and the laminated iron core body. The cull plate has a groove shaped runner directed toward the magnet-insert hole from a resin reservoir and provided with a gate hole communicating with the magnet-insert hole, and a through hole which vertically passes through the cull plate is formed in the runner of the cull plate at a different position from a position of the gate hole. After the magnet-insert hole is filled with the mold resin a resin residue remaining in the cull plate is pushed off and removed from the gate hole and the through hole.

### Citation List

### Patent Literature

Patent Literature 1: JP 2006-204068 A

### Summary of Invention

### Technical Problem

In the rotor manufacturing apparatus described in Patent Literature 1, a runner, which is the resin accumulated in each of the flow paths, and the resin in the corresponding one of the pots, are solidified as one lump. Thus, when the upper mold having the pots is separated from the rotor laminated iron core, the pots and the flow paths are separated together from the rotor laminated iron core. As a result, the runner in each of the flow paths cannot be removed. The runner is removed by using a cleaning apparatus in the rotor manufacturing apparatus after filling of the resin into the rotor laminated iron core is completed. As described above, the runner cannot be easily removed in a conventional rotor manufacturing apparatus, and thus the removal of the runner is a factor that hinders improvement of productivity.

It is an object of the present invention to provide a rotor manufacturing apparatus capable of facilitating removal of a runner and improving productivity in manufacturing of a rotor.

### Solution to Problem

A rotor manufacturing apparatus according to an embodiment of the present invention is configured to manufacture a rotor including a magnet and a rotor body in a cylindrical shape having an accommodating hole for accommodating the magnet, the magnet being fixed with resin in the accommodating hole. The rotor manufacturing apparatus includes a first mold provided with a resin pot having opposite ends with respective opening portions, a plunger that is located in the resin pot and is movable from one of the opening portions of the resin pot toward the other, and a second mold on which the rotor body is mounted and that is located facing the first mold. The resin pot has a portion in a shape of a groove in the circumferential direction on the outer peripheral surface of the resin pot that allows melted resin to flow and solidify around the portion. The first mold includes a first mold body having the plunger and the resin pot, a runner plate in a tabular shape located between the first mold body and the second mold while being allowed to separate from the first mold body in a thickness direction, the runner plate having a recess located on a side in contact with the first mold body, the recess constituting a part of a flow path for allowing the resin melted to flow, and a resin accommodating space surrounded by the resin pot, the plunger, and the recess to accommodate melted resin in a state where the first mold body and the runner plate are in contact with each other. The flow path communicates with the resin accommodating space in a state where the first mold body and the runner plate are in contact with each other.

### Advantageous Effects of Invention

The rotor manufacturing apparatus according to the embodiment of the present invention enables facilitating removal of a runner and improving productivity in manufacturing of a rotor.

### Brief Description of Drawings

Fig. 1 is a partial sectional view of a first mold and a second mold of a rotor manufacturing apparatus according to an embodiment.
Fig. 2 is a partially enlarged sectional view of Fig. 1.
Fig. 3 is a partial sectional view illustrating movement of a runner sweeping plate of the rotor manufacturing apparatus according to the embodiment.
Fig. 4 is a plan view of a runner plate in the rotor manufacturing apparatus according to the embodiment in a direction of arrow A in Fig. 1.
Fig. 5 is a flow chart of a rotor manufacturing step of the rotor manufacturing apparatus according to the embodiment.
Fig. 6 is a partial sectional view of the rotor manufacturing apparatus according to the embodiment in a supply step.
Fig. 7 is a partial sectional view of the rotor manufacturing apparatus according to the embodiment in a mold clamping step.
Fig. 8 is a partial sectional view of the rotor manufacturing apparatus according to the embodiment in a filling step.
Fig. 9 is a partial sectional view of the rotor manufacturing apparatus according to the embodiment in a runner removing step.
Fig. 10 is a partial sectional view of the rotor manufacturing apparatus according to the embodiment in a mold opening step and a runner sweeping step.

### Description of Embodiments

Hereinafter, exemplary embodiments of the present invention will be described with reference to the drawings. The same or corresponding parts in the drawings are designated by the same reference numerals, and description thereof will not be duplicated. Each of the drawings shows dimensions of components that do not faithfully represent actual dimensions of the components and dimensional ratios of the respective components.

In the following description on a rotor manufacturing apparatus 1 according to an exemplary embodiment of the present invention, a term "axis direction", "axial", or "axially" refers to a direction parallel with an axis of a rotor body 100, a term "radial direction", "radial", or "radially" refers to a direction orthogonal to the axis, and a term "circumferential direction", "circumferential", or "circumferentially" refers to a direction along an arc about the axis. Additionally, the term "up and down direction" refers to a vertical direction in a state where the rotor manufacturing apparatus 1 is installed. However, the definition of each of the directions does not intend to limit a direction when the rotor manufacturing apparatus 1 is used.

The following description includes expressions such as "fixed", "connected", "joined" and "attached" (hereinafter referred to as "fixed" or the like) that are applied to not only members that are directly, for example, fixed to each other, but also members that are, for example, fixed using another member. That is, the expression, for example, "fixed" in the following description includes meanings indicating that members are directly fixed to each other and that the members are indirectly fixed to each other.

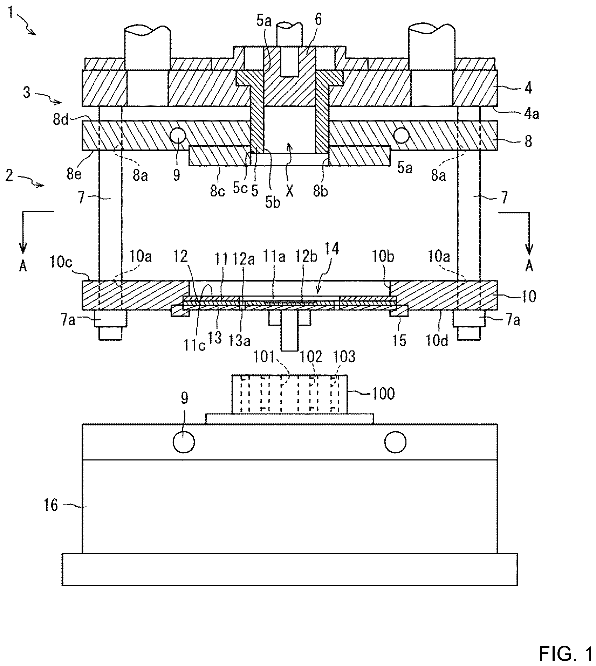

The rotor manufacturing apparatus 1 is described below in which the rotor body 100 means an iron core of a motor formed by stacking electromagnetic steel sheets in their thickness directions. The rotor body 100 has a shaft hole 101 that accommodates a shaft and a plurality of accommodating holes 102 each of which accommodates a magnet 103 (see Fig. 1). The shaft hole 101 in the rotor body 100 is a through-hole including the axis of the rotor body 100. That is, the rotor body 100 has a cylindrical shape extending axially. The plurality of accommodating holes 102 are aligned around the shaft hole 101 in the circumferential direction of the rotor body 100. Each of the accommodating holes 102 accommodates the magnet 103.

In the following description of the rotor manufacturing apparatus 1, a resin pellet P means a solid before melting of resin that is to be melted and poured into the accommodating holes 102 of the rotor body 100. The resin pellet P is, for example, a solid in a columnar shape having a diameter of about 40 mm. Then, a runner R means a resin solidified in a flow path 14 (see Fig. 1) through which melted resin passes to be poured from a resin pot 5 into the accommodating holes 102 of the rotor body 100.

### (Configuration of rotor manufacturing apparatus 1)

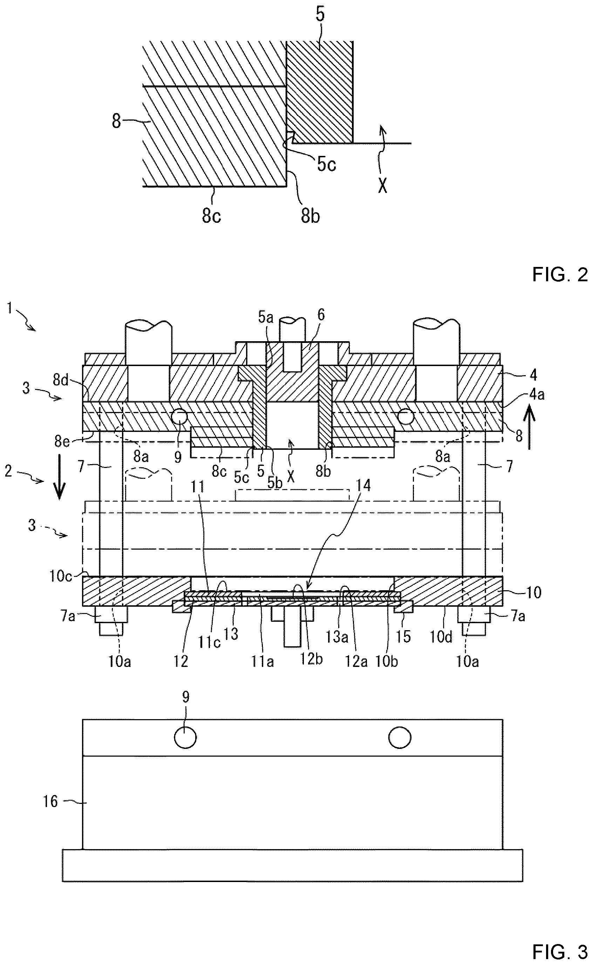

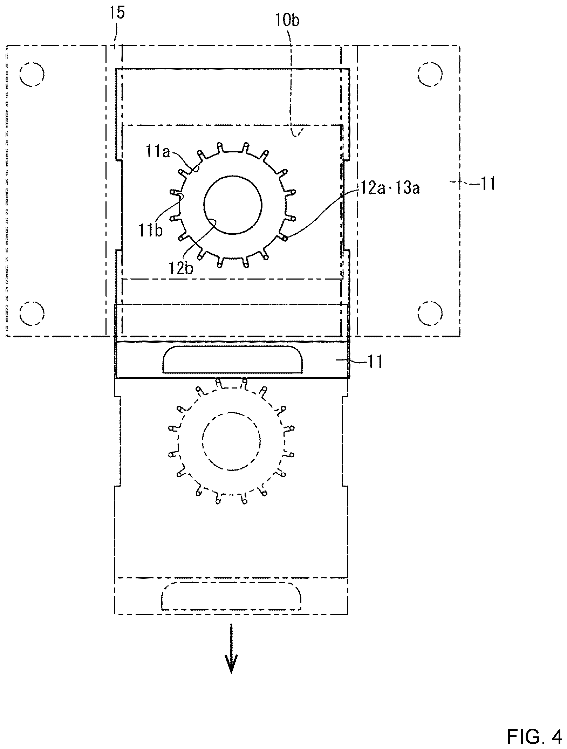

Fig. 1 is a partial sectional view of a first mold and a second mold of the rotor manufacturing apparatus according to the exemplary embodiment of the present invention. Fig. 2 is a partially enlarged sectional view illustrating a part of the resin pot 5 in Fig. 1 in an enlarged manner. Fig. 3 is a partial sectional view illustrating movement of a runner sweeping plate of the rotor manufacturing apparatus according to the embodiment of the present invention. Fig. 4 is a plan view of a runner plate in the rotor manufacturing apparatus according to the embodiment in a direction of arrow A in Fig. 1.

As illustrated in Fig. 1, the rotor manufacturing apparatus 1 is configured to manufacture a rotor including the rotor body 100 and the magnets 103. The rotor manufacturing apparatus 1 includes a first mold 2 in a tabular shape, a plunger 6, and a second mold 16 in a tabular shape. The rotor manufacturing apparatus 1 is configured to pour melted resin into the rotor body 100 in a state where the rotor body 100 mounted on the second mold 16 is sandwiched between the first mold 2 and the second mold 16.

As illustrated in Figs. 1 and 3, the first mold 2 is supported by a frame (not illustrated) using a first drive mechanism (not illustrated). The second mold 16 is supported by a frame (not illustrated). The rotor body 100 is mounted on the second mold 16. The first mold 2 is located facing the second mold 16 at an interval in a thickness direction of the second mold 16. In the present embodiment, the first mold 2 is located above the second mold 16. The first mold 2 overlaps with the second mold 16 when the rotor manufacturing apparatus 1 is viewed vertically. The first mold 2 can be separated from the second mold 16 by the first drive mechanism. That is, the first mold 2 moves vertically with respect to the second mold 16.

The first mold 2 includes a first mold body 3 and a runner plate 11. The runner plate 11 is held by a runner-plate holding plate 10. The first mold body 3 is located above the runner-plate holding plate 10 and the runner plate 11. That is, the runner-plate holding plate 10 and the runner plate 11 are located between the first mold body 3 and the second mold 16.

The first mold body 3 includes a mounting plate 4 having the resin pot 5 and a plurality of guide shafts 7, and a runner sweeping plate 8.

The mounting plate 4 is a tabular member to which the resin pot 5 is mounted. The mounting plate 4 with a thickness direction facing vertically is connected to the frame using the first drive mechanism. The mounting plate 4 is movable vertically (in the thickness direction) with respect to the second mold 16 using the first drive mechanism. The mounting plate 4 is also movable vertically in an attitude maintained with respect to the second mold 16 using the first drive mechanism. The mounting plate 4 includes the resin pot 5.

As illustrated in Figs. 1 and 2, the resin pot 5 is a container for containing melted resin. The resin pot 5 is a cylindrical member having opening portions at both axial ends. The resin pot 5 with an axis direction facing vertically is fixed to the substantially center of the mounting plate 4. That is, the resin pot 5 opens upward and downward. The resin pot 5 moves vertically together with the mounting plate 4. The resin pot 5 has one opening portion 5a that is located at its upper portion and through which the plunger 6 is inserted. The resin pot 5 has another opening portion 5b that is located at its lower portion and that projects downward from a lower surface 4a of the mounting plate 4. The other opening portion 5b is provided in its outer peripheral surface with a reverse tapered portion 5c in which an outer diameter of the resin pot 5 decreases toward the lower surface 4a of the mounting plate 4. The resin pot 5 constitutes a part of a resin accommodating space X for accommodating melted resin.

As illustrated in Figs. 1 and 3, the plunger 6 is a columnar member that extrudes the melted resin in the resin accommodating space X of the resin pot 5. The plunger 6 is supported by the frame using a plunger drive mechanism (not illustrated). The plunger 6 with an axial direction facing vertically is inserted into the resin pot 5 through the one opening portion 5a of the resin pot 5. That is, the plunger 6 is configured to cover the opening at the top of the resin pot. The plunger 6 moves with respect to the resin pot 5 from the one opening portion 5a toward the other opening portion 5b using the plunger driving mechanism. The plunger 6 is located in the resin pot 5 by the plunger drive mechanism (not illustrated) regardless of a vertical position of the mounting plate 4. The plunger 6 located in the resin pot 5 constitutes a part of the resin accommodating space X for accommodating melted resin.

The plurality of guide shafts 7 are each a shaft-shaped member that guides the runner sweeping plate 8 and the runner-plate holding plate 10. The plurality of guide shafts 7 with axial directions facing vertically are connected to the mounting plate 4 to extend downward from the mounting plate 4. The plurality of guide shafts 7 move vertically (in the axial direction) integrally with the mounting plate 4. In the present embodiment, the plurality of guide shafts 7 are located facing each other at a predetermined interval in a direction perpendicular to an axis of the resin pot 5. The plurality of guide shafts 7 are each provided at its lower end portion with an engaging portion 7a that supports the runner-plate holding plate 10.

The runner sweeping plate 8 is a tabular member for peeling off the runner R from the resin pot 5. The runner sweeping plate 8 is located below the mounting plate 4. That is, the runner sweeping plate 8 is located between the mounting plate 4 and the runner plate 11. The runner sweeping plate 8 with a thickness direction facing vertically is connected to the mounting plate 4 using a sweeping-plate drive mechanism (not illustrated). The runner sweeping plate 8 has a plurality of guide holes 8a into which the respective guide shafts 7 are inserted, and a resin pot insertion hole 8b into which the resin pot 5 is inserted. The plurality of guide holes 8a and the resin pot insertion hole 8b pass through the runner sweeping plate 8 in its thickness direction. The runner sweeping plate 8 includes a runner cover 8c that is a protruding surface in which a rectangular area including the resin pot insertion hole 8b protrudes downward. That is, the resin pot insertion hole 8b opens in the runner cover 8c. The runner sweeping plate 8 includes a heater 9 being a heat source. The heater 9 of the runner sweeping plate 8 is located near the resin pot insertion hole 8b.

The runner sweeping plate 8 can be separated from the mounting plate 4 in the thickness direction by the sweeping-plate drive mechanism. In the present embodiment, the runner sweeping plate 8 moves vertically with respect to the mounting plate 4. That is, the runner sweeping plate 8 can be separated from the mounting plate 4 vertically (in the thickness direction) and can be separated from the runner plate 11 vertically (in the thickness direction). The runner sweeping plate 8 is movable vertically in an attitude maintained with respect to the mounting plate 4 using the plurality of guide shafts 7 inserted into the respective guide holes 8a.

The resin pot 5 is partially inserted into the resin pot insertion hole 8b. When the runner sweeping plate 8 is located uppermost in a movable range of the runner sweeping plate 8, and an upper surface 8d of the runner sweeping plate 8 and the lower surface 4a of the mounting plate 4 are in contact with each other, the runner cover 8c is located above the reverse tapered portion 5c of the resin pot 5. When the runner sweeping plate 8 is located lowermost in the movable range of the runner sweeping plate 8, and the upper surface 8d of the runner sweeping plate 8 and the lower surface 4a of the mounting plate 4 are separated from each other, the runner cover 8c is located below the reverse tapered portion 5c of the resin pot 5.

As described above, the first mold body 3 includes the mounting plate 4 including the resin pot 5, and the runner sweeping plate 8 that is located between the mounting plate 4 and the runner plate 11, and that can be separated vertically from the mounting plate 4 and the runner plate 11 in a state where the resin pot 5 is inserted into the resin pot insertion hole 8b. The runner sweeping plate 8 is connected to the mounting plate 4 using the sweeping-plate drive mechanism. This allows the mounting plate 4, the resin pot 5, the plurality of guide shafts 7, and the runner sweeping plate 8 to be integrated with each other, so that the first mold body 3 can be separated vertically from the runner plate 11 and the second mold 16. When the runner sweeping plate 8 moves vertically, the runner cover 8c moves to a position above the reverse tapered portion 5c of the resin pot 5 or a position below the reverse tapered portion 5c of the resin pot 5.

The runner-plate holding plate 10 is a tabular member for holding the runner plate 11. The runner-plate holding plate 10 is located below the runner sweeping plate 8. That is, the runner-plate holding plate 10 is located between the runner sweeping plate 8 and the second mold 16. The runner-plate holding plate 10 has a plurality of guide holes 10a into which the respective guide shafts 7 are inserted, and a runner cover insertion hole 10b into which a protruding portion constituting the runner cover 8c of the runner sweeping plate 8 is inserted. The plurality of guide holes 10a and the runner cover insertion hole 10b pass through the runner-plate holding plate 10 in its thickness direction.

The runner-plate holding plate 10 allows the guide shafts 7 to be inserted into the respective guide holes 10a. This allows the runner-plate holding plate 10 with the thickness direction facing vertically to be located below the runner sweeping plate 8. Then, the runner-plate holding plate 10 engages with the engaging portions 7a of the respective guide shafts 7. That is, the runner-plate holding plate 10 is connected to the mounting plate 4 with the plurality of guide shafts 7. The runner-plate holding plate 10 is movable vertically (in the thickness direction) in an attitude maintained with respect to the mounting plate 4 using the plurality of guide shafts 7.

The runner plate 11 is a tabular member having the flow path 14 for pouring melted resin in the resin pot 5 into the accommodating holes 102 of the rotor body 100. The runner plate 11 is located below the runner-plate holding plate 10. That is, the runner plate 11 is located between the runner-plate holding plate 10 and the second mold 16. The runner plate 11 with a thickness direction facing vertically is held by the runner-plate holding plate 10. The runner plate 11 is configured to cover the runner cover insertion hole 10b of the runner-plate holding plate 10. The runner plate 11 includes a first gate plate 12 and a second gate plate 13 that are each in a tabular shape.

The first gate plate 12 and the second gate plate 13 are located below the runner plate 11. That is, the first gate plate 12 is located between the runner plate 11 and the second mold 16. The first gate plate 12 with a thickness direction facing vertically is held by the runner-plate holding plate 10 while being in contact with the runner plate 11. The second gate plate 13 with a thickness direction facing vertically is held by the runner-plate holding plate 10 while being in contact with the first gate plate 12. That is, the first gate plate 12 and the second gate plate 13 are held by the runner-plate holding plate 10 while being stacked in the thickness direction.

As illustrated in Fig. 4, the runner plate 11 has a through-hole through which melted resin flows. Specifically, the through-hole has a circular portion 11a having a circular shape as viewed in a plan view, and a plurality of grooves 11b extending radially from the circular portion 11a.

The first gate plate 12 has a plurality of through-holes 12a. The plurality of through-holes 12a communicate with the respective grooves 11b of the runner plate 11 in a state where the runner plate 11 and the first gate plate 12 are stacked. The second gate plate 13 has a plurality of through-holes 13a. In a state where the first gate plate 12 and the second gate plate 13 are stacked, the plurality of through-holes 12a communicate with the respective through-holes 13a. The runner plate 11, the first gate plate 12, and the second gate plate 13 constitute the flow path 14 for allowing melted resin to flow into the accommodating holes 102 of the rotor body 100.

The flow path 14 includes a flow path body and a resin outlet. The circular portion 11a and the plurality of grooves 11b of the runner plate 11 constitute the flow path body. The circular portion 11a is an upstream portion of the flow path body. The circular portion 11a coincides in position with the other opening portion 5b of the resin pot 5 when viewed axially. That is, the flow path body communicates with the other opening portion 5b of the resin pot 5. Each of the grooves 11b is a downstream portion of the flow path body. The plurality of through-holes 12a and the plurality of through-holes 13a constitute respective resin outlets. The plurality of resin outlets communicate with the downstream portion of the flow path body. The plurality of resin outlets coincide in position with the respective accommodating holes 102 of the rotor body 100 mounted on the second mold 16 when viewed axially. That is, the plurality of resin outlets communicate with the respective accommodating holes 102. The term, "upstream" in the present embodiment, means an upstream direction in which resin melted in the resin pot 5 flows from the resin pot 5 into the plurality of accommodating holes 102. The flow path body has an upstream side that is relatively close to the resin pot 5 in the flow path body. The flow path body has a downstream side that is relatively close to the plurality of accommodating holes 102 in the flow path body.

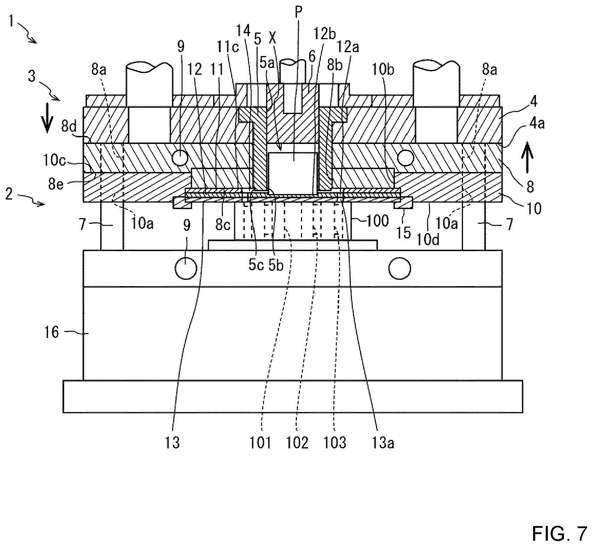

The circular portion 11a and the plurality of grooves 11b, constituting the through-hole of the runner plate 11, have lower opening portions covered with the first gate plate 12. This allows the circular portion 11a and the plurality of grooves 11b to be formed as a recess with a bottom surface formed by the first gate plate 12. That is, the runner plate 11 has the recess that constitutes a part of the flow path 14. The recess of the runner plate 11 is composed of the circular portion 11a and the first gate plate 12, and is configured to cover the opening at a bottom of the resin pot 5 in a state where the first mold body 3 and the runner plate 11 are in contact with each other. This allows the first mold 2 to have a resin accommodating space X surrounded by the plunger 6 covering the one opening portion 5a of the resin pot 5 and the recess of the runner plate 11, covering the other opening portion 5b of the resin pot 5, in a cylinder of the resin pot 5. The runner plate 11 has the flow path 14 that communicates with the resin accommodating space X in a state where the first mold body 3 and the runner plate 11 are in contact with each other (see Fig. 7).

The first gate plate 12 has a portion covering the circular portion 11a of the flow path body, the portion having a resin pellet recess 12b in a circular shape on which the resin pellet P is placed. That is, the resin pellet recess 12b is further recessed in the thickness direction of the runner plate 11 from a bottom surface of the circular portion 11a that is the recess. The resin pellet recess 12b is located in a range overlapping the resin accommodating space X of the resin pot 5 when viewed in the thickness direction of the runner plate. The resin pellet P placed in the resin pellet recess 12b is accommodated in the resin accommodating space X of the resin pot 5 in a state where the runner plate 11 and the first mold body 3 are in contact with each other (see Fig. 7) .

The first mold 2 may include a plurality of runner plates 11. In this case, the plurality of runner plates 11 are each stacked in its thickness direction.

As illustrated in Figs. 1 and 4, the first mold body 3 includes guide rails 15 that hold the runner plate 11, the first gate plate 12, and the second gate plate 13. The guide rails 15 are located on a lower surface 10d of the runner-plate holding plate 10 at a position facing each other in the radial direction of the rotor body 100. The guide rail 15 holds opposite ends of the runner plate 11, the first gate plate 12, and the second gate plate 13, which are stacked. This allows the runner plate 11, the first gate plate 12, and the second gate plate 13, which are each stacked in its thickness direction, to be movable in a direction orthogonal to the thickness direction and a direction of the opposite ends held by the guide rails 15. Thus, the runner plate 11, the first gate plate 12, and the second gate plate 13 are detachable from the first mold body 3. The guide rails 15 are preferably detachable from the first mold body 3. In this case, for example, the guide rails 15 are attached to the lower surface 10d of the runner-plate holding plate 10 with screws.

As illustrated in Fig. 3, when the first mold body 3 is located at the lowest position in a movable range of the first mold body 3, and an upper surface 10c of the runner-plate holding plate 10 and a lower surface 8e of the runner sweeping plate 8 are in contact with each other, a protruding portion having the runner cover 8c of the runner sweeping plate 8 is inserted into the runner cover insertion hole 10b of the runner-plate holding plate 10. At this time, the runner cover 8c is in contact with an upper surface 11c of the runner plate 11. This allows the recess being a part of the flow path 14 of the runner plate 11 to be covered with the runner cover 8c and a lower end of the resin pot 5. The reverse tapered portion 5c of the resin pot 5 located below the runner cover 8c is located in the recess being a part of the flow path 14.

When the first mold body 3 moves upward and the upper surface 10c of the runner-plate holding plate 10 and the lower surface 8e of the runner sweeping plate 8 are separated from each other, the runner plate 11 and the runner-plate holding plate 10 do not move until the engaging portions 7a of the guide shaft 7 engage with the runner-plate holding plate 10. Even when the mounting plate 4 and the guide shafts 7 move upward, the rotor body 100, which is mounted on the second mold 16 and sandwiched between the second mold 16, and the runner-plate holding plate 10 and the runner plate 11, is still sandwiched therebetween until the engaging portions 7a of the guide shafts 7 engage with the runner-plate holding plate 10.

When the first mold body 3 is located uppermost in the movable range of the first mold body 3 and the engaging portions 7a of the guide shafts 7 are engaged with the runner-plate holding plate 10, the runner-plate holding plate 10 and the runner plate 11 are separated from the second mold 16 while being separated from the runner sweeping plate 8. That is, the runner plate 11 and the runner-plate holding plate 10 can be separated from the first mold body 3 in the vertical direction (thickness direction).

The second mold 16 is configured to sandwich the rotor body 100 with the first mold 2. The second mold 16 is supported by a frame (not illustrated). The second mold 16 has an upper surface 16a on which the rotor body 100 is mounted. The second mold 16 is configured to enable positioning the rotor body 100 at a predetermined position. The second mold 16 includes the heater 9 being a heat source. The heater 9 of the second mold 16 is located in an upper end portion of the second mold 16.

As described above, the rotor manufacturing apparatus 1 includes the first mold 2 provided with the resin pot 5 having the opposite ends with the one opening portion 5a and the other opening portion 5b, the plunger 6 that is located in the resin accommodating space X and is movable from the one opening portion 5a toward the other opening portion 5b of the resin pot 5, and the second mold 16 on which the rotor body 100 is mounted and that is located facing the first mold 2. The first mold 2 includes the first mold body 3 having the resin pot 5, and the runner plate 11 in a tabular shape located between the first mold body 3 and the second mold 16 while being allowed to separate from the first mold body 3 in the thickness direction, the runner plate 11 having the recess located on a side in contact with the first mold body 3, the recess constituting a part of the flow path 14 for allowing the resin melted to flow, and the first mold 2 has the resin accommodating space X surrounded by the resin pot 5, the plunger 6, and the recess of the runner plate 11 to accommodate melted resin in a state where the first mold body 3 and the runner plate 11 are in contact with each other. The flow path 14 communicates with the resin accommodating space X in a state where the first mold body 3 and the runner plate 11 are in contact with each other.

The first mold body 3 includes the mounting plate 4 including the resin pot 5, and the runner sweeping plate 8 that is located between the mounting plate 4 and the runner plate 11 and includes the resin pot insertion hole 8b into which the resin pot 5 is inserted, and that can be separated in the thickness direction from both the mounting plate 4 and the runner plate 11 in a state where the resin pot 5 is inserted into the resin pot insertion hole 8b. The first mold 2 is configured to cover the recess of the runner plate 11 with an end portion, close to the runner plate 11, of the resin pot 5 and the runner sweeping plate 8 in a state where the mounting plate 4 and the runner sweeping plate 8 are in contact with each other, and the runner sweeping plate 8 and the runner plate 11 are in contact with each other.

As described above, the rotor manufacturing apparatus 1 has the flow path 14 for pouring melted resin into the rotor body 100, the flow path 14 being provided in a surface of the runner plate 11, the surface being in contact with the first mold body 3. As a result, the rotor manufacturing apparatus 1 of the present application is configured such that the first mold body 3 provided with the resin pot 5 is separated from the runner plate 11 to open the flow path 14 on a side close to the first mold body 3, and then the runner R having solidified as one lump together with resin in the resin pot 5 is pulled out from the flow path 14 toward the first mold body 3 as the first mold 2 moves. This facilitates removal of the runner in the flow path 14. Then, when the runner sweeping plate 8 is separated from the mounting plate 4, the runner sweeping plate 8 extrudes the runner R solidified integrally with the resin in the resin pot 5 in a direction in which the runner R is separated from the resin pot 5. As described above, the runner R is easily removed from the flow path 14 and the resin pot 5 by the runner sweeping plate 8.

The other opening portion 5b in the end portion of the resin pot 5, close to the runner plate 11, has the reverse tapered portion 5c in which the resin pot 5 decreases in outer diameter toward the mounting plate 4.

The reverse tapered portion 5c in the end portion of the resin pot 5, close to the runner plate 11, is located in the recess constituting the flow path 14, so that melted resin in the flow path 14 solidifies while having flowed around the reverse tapered portion 5c. The runner R is fixed to the reverse tapered portion 5c. When the first mold body 3 including the resin pot 5 is separated from the runner plate 11, the runner R fixed to the resin pot 5 is pulled in a direction away from the flow path 14. Then, the runner R in the flow path 14 is easily removed from the flow path 14 by movement of the first mold body 3.

The runner plate 11 has the resin pellet recess 12b that is recessed from the recess constituting the flow path 14 in a range overlapping with the resin accommodating space X when viewed in the thickness direction of the runner plate 11. The resin pot 5 accommodates the resin pellet P supplied to the resin pellet recess 12b on the runner plate 11 in a state where the first mold body 3 and the runner plate 11 are in contact with each other.

The first mold body 3 including the resin pot 5 moves toward the runner plate 11 to accommodate the resin pellet P placed on the runner plate 11 in the resin accommodating space X of the first mold body 3. At this time, the resin pellet P is placed at an appropriate position on the runner plate 11 with reference to the resin pellet recess 12b. Thus, an error in supplying the resin pellet P into the resin accommodating space X due to misalignment during supply is reduced. The resin pellet P is positioned by the resin pellet recess 12b, so that the resin pellet P after being placed on the runner plate 11 is unlikely to shift in position. This reduces an error in supplying the resin pellet P into the resin accommodating space X due to misalignment after the resin pellet P is placed on the runner plate 11.

The flow path 14 includes the flow path body having an upstream side communicating with the resin accommodating space X of the resin pot 5, and the resin outlets located on a downstream side of the flow path body. The runner plate 11 includes the first gate plate 12 having the through-holes 12a passing through the first gate plate 12 in its thickness direction and the second gate plate 13 having the through-holes 13a. The runner plate 11, the first gate plate 12, and the second gate plate 13 are detachable from the first mold body 3. The first gate plate 12 and the second gate plate 13 are located opposite to the surface of the runner plate 11, the surface being in contact with the first mold body 3, in the thickness direction while being stacked in the thickness direction. The flow path body includes the recess of the runner plate 11. The resin outlets includes the through-holes 12a and the through-holes 13a that communicate with each other in a state where the first gate plate 12 and the second gate plate 13 are stacked in the thickness direction.

The rotor manufacturing apparatus 1 includes the runner plate 11 having the recess included in the flow path body, and the first gate plate 12 and the second gate plate 13 each having the resin outlets. The resin outlets are composed of the through-holes 12a and the through-holes 13b that communicate with each other when the first gate plate 12 and the second gate plate 13 are stacked in the thickness direction. Thus, when the flow path body or the resin outlets have a problem, the runner plate 11 or the gate plate 12, causing the problem, can be replaced.

The runner plate 11 has the through-hole including the circular portion 11a having a circular shape in a plan view and passing through the runner plate 11 in the thickness direction, and the plurality of grooves 11b extending radially from the circular portion 11a. The flow path body includes the through-hole. As described above, the flow path 14 can be easily formed with the runner plate 11 having the through-hole.

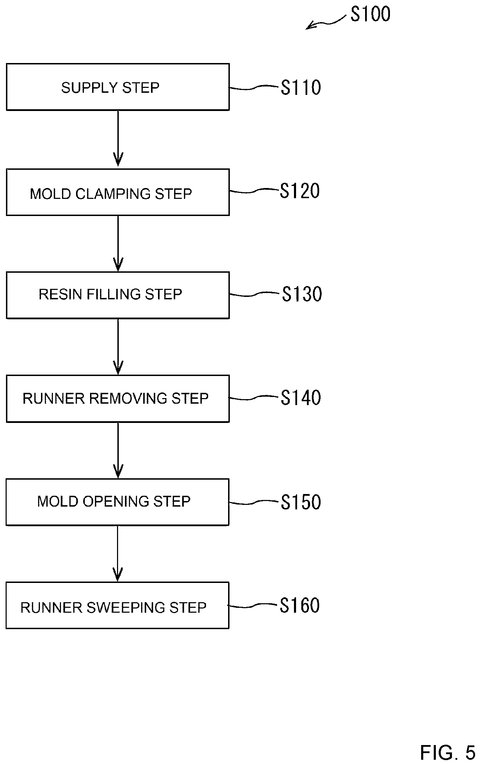

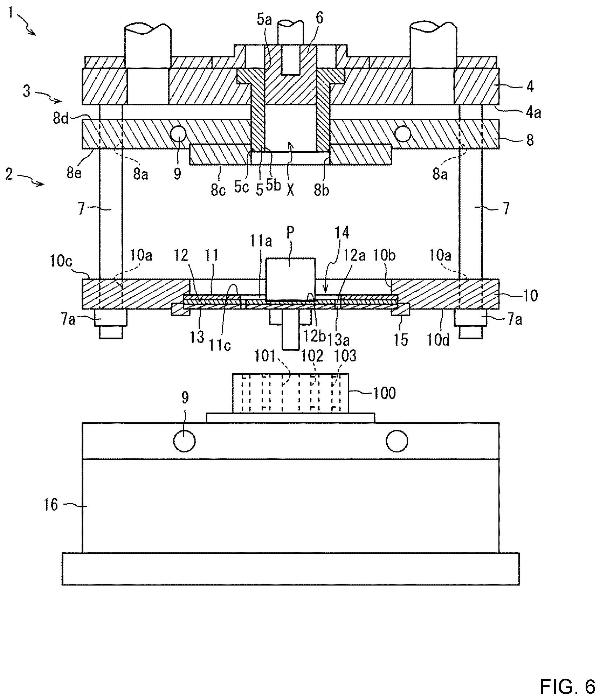

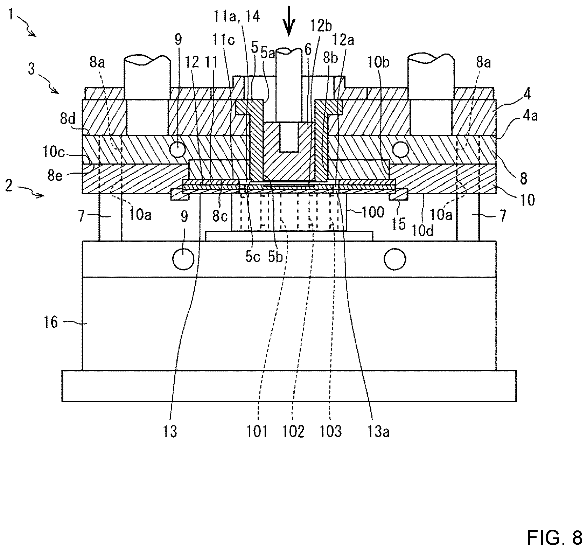

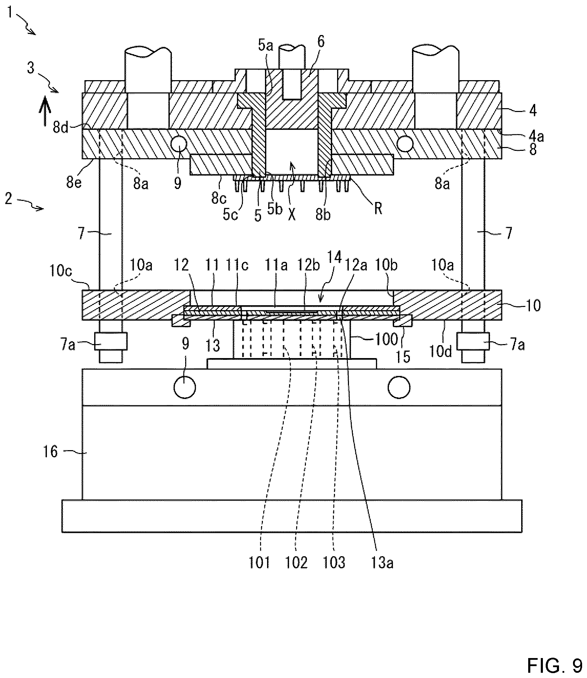

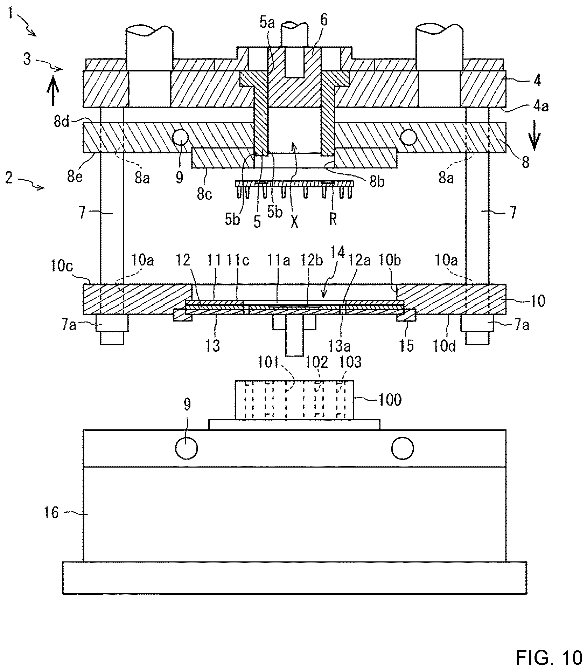

Next, a rotor manufacturing step S100 using the rotor manufacturing apparatus 1 will be described with reference to Figs. 5 to 10. Fig. 5 is a flow chart of the rotor manufacturing step of the rotor manufacturing apparatus according to the embodiment of the present invention. Fig. 6 is a partial sectional view of the rotor manufacturing apparatus according to the embodiment of the present invention in a supply step. Fig. 7 is a partial sectional view of the rotor manufacturing apparatus according to the embodiment of the present invention in a mold clamping step. Fig. 8 is a partial sectional view of the rotor manufacturing apparatus according to the embodiment of the present invention in a filling step. Fig. 9 is a partial sectional view of the rotor manufacturing apparatus according to the embodiment of the present invention in a runner removing step. Fig. 10 is a partial sectional view of the rotor manufacturing apparatus according to the embodiment of the present invention in a mold opening step and a runner sweeping step.

As illustrated in Fig. 5, the rotor manufacturing step S100 includes a supply step S110, a mold clamping step S120, a resin filling step S130, a runner removing step S140, a mold opening step S150, and a runner sweeping step S160.

As illustrated in Fig. 6, the rotor manufacturing apparatus 1 has an initial state where the first mold body 3 is located uppermost in the movable range of the first mold body 3. The runner sweeping plate 8 of the first mold body 3 is located lowermost in the movable range of the runner sweeping plate 8. The runner plate 11 and the runner-plate holding plate 10 are separated from not only the runner sweeping plate 8 but also the second mold 16.

In the supply step S110, the rotor body 100 and the resin pellets P are supplied to the rotor manufacturing apparatus 1. In the supply step S110, the rotor body 100 is mounted on the second mold 16. The resin pellet P is supplied to the resin pellet recess 12b of the runner plate 11. The rotor manufacturing step S100 proceeds to the mold clamping step S120 after the supply step S110 is completed.

As illustrated in Fig. 7, in the mold clamping step S120, the rotor body 100 is sandwiched between the first mold 2 and the second mold 16. In the mold clamping step S120, the first mold body 3 moves downward from the uppermost position in the movable range of the first mold body 3. At the same time, the runner sweeping plate 8 moves from the lowermost position in the movable range of the runner sweeping plate 8 to the uppermost position where the upper surface 8d of the runner sweeping plate 8 and the lower surface 4a of the mounting plate 4 come into contact with each other. When the first mold body 3 moves downward, the runner plate 11 held by the runner-plate holding plate 10 comes into contact with an upper end portion of the rotor body 100. The runner plate 11 and the runner-plate holding plate 10 stop in a state where the runner plate 11 is in contact with the upper end portion of the rotor body 100. The first mold body 3 moves in the movable range of the first mold body 3 to the lowermost position where the upper surface 10c of the runner-plate holding plate 10 and the lower surface 8e of the runner sweeping plate 8 come into contact with each other. At this time, the first mold 2 takes in the resin pellet P on the runner plate 11 into the resin accommodating space X. The first mold 2 including the first mold body 3 and the runner plate 11, and the second mold 16 sandwich the rotor body 100 mounted on the second mold 16 with a predetermined force. The rotor manufacturing step S100 proceeds to the resin filling step S130 after the mold clamping step S120 is completed.

As illustrated in Fig. 8, in the resin filling step S130, melted resin is poured into the accommodating holes 102 of the rotor body 100. In the resin filling step S130, the heater 9 of the first mold body 3 heats the resin pot 5 of the first mold body 3. The resin pellet P in the resin accommodating space X, which is partially composed of the resin pot 5, is melted in the resin accommodating space X by heat of the resin pot 5 heated by the heater 9. At the same time, the heater 9 of the second mold 16 heats the rotor body 100. After a predetermined heating time has elapsed, the plunger 6 moves downward in the resin pot 5. The plunger 6 extrudes the melted resin in the resin accommodating space X into the flow path 14 of the runner plate 11, which communicates with the resin accommodating space X. The resin in the resin accommodating space X passes through the flow path body composed of the circular portion 11a of the runner plate 11 and the plurality of grooves 11b, and then is filled into the accommodating holes 102 of the rotor body 100 through the resin outlets composed of the plurality of through-holes 12a of the first gate plate 12 and the plurality of through-holes 13a of the second gate plate 13. When the resin supplied into the accommodating holes 102 solidifies, the magnets 103 are fixed with the resin in the respective accommodating holes 102. As a result, a rotor is manufactured by the rotor manufacturing apparatus 1. The rotor manufacturing step S100 proceeds to the runner removing step S140 after the resin filling step S130 is completed.

As illustrated in Fig. 9, in the runner removing step S140, the runner R is removed from the flow path 14. In the runner removing step S140, the resin in the resin accommodating space X and the resin in the recess of the flow path 14 are cooled, and then solidify as one lump and solidify after flowing around the reverse tapered portion 5c of the resin pot 5 located in the recess. The first mold body 3 moves upward to separate the runner cover 8c from the upper surface 11c of the runner plate 11. The first mold body 3 moving upward pulls up the runner R in the recess in a direction away from the runner plate 11 in a state where the runner R is engaged with the reverse tapered portion 5c of the resin pot 5. The runner R is pulled upward from the inside of the flow path body of the runner plate 11 and the inside of the resin outlets of the first gate plate 12 and the second gate plate 13. At this time, the runner-plate holding plate 10 maintains a state of being in contact with the upper end portion of the rotor body 100 due to its own weight. As described above, the first mold body 3 removes the runner R in the flow path body of the runner plate 11, and in the resin outlets of the first gate plate 12 and the second gate plate 13.

As illustrated in Fig. 10, in the mold opening step S150, sandwiching of the rotor body 100 between the first mold 2 and the second mold 16 is released. In the mold opening step S150, the first mold 2 moves to the uppermost position in the movable range of the first mold 2. The runner plate 11 and the runner-plate holding plate 10 are separated from the rotor body 100 while being separated from the runner sweeping plate 8 by the engaging portions 7a of the guide shafts 7. The first mold 2 and the second mold 16 release the sandwiching of the rotor body 100. The rotor manufacturing step S100 proceeds to the runner sweeping step S160 after the mold opening step S150 is completed.

In the runner sweeping step S160, the runner R is removed from the rotor manufacturing apparatus 1, and the rotor body 100 is taken out. In the runner sweeping step S160, the runner sweeping plate 8 moves to the lowermost position in the movable range of the runner sweeping plate 8 to separate the upper surface 8d of the runner sweeping plate 8 from the lower surface 4a of the mounting plate 4. At this time, the runner cover 8c moves from a position above the reverse tapered portion 5c of the resin pot 5 to a position below the reverse tapered portion 5c of the resin pot 5. This allows the runner cover 8c to extrude the runner R engaged with the reverse tapered portion 5c of the resin pot 5 in a direction away from the resin pot 5 to separate the runner R from the reverse tapered portion 5c of the resin pot 5. Then, the rotor body 100 filled with the resin and mounted on the second mold 16 is taken out. The runner plate 11, the first gate plate 12, and the second gate plate 13 can be replaced in the runner sweeping step S160. The rotor manufacturing step S100 proceeds to the supply step S110 after the runner sweeping step S160 is completed.

As described above, the runner plate 11 in the mold clamping step S120 sandwiches the rotor body 100 mounted on the second mold 16 with the second mold 16 while being in contact with the first mold body 3. The plunger 6 in the resin filling step S130 extrudes the melted resin in the resin pot 5 into the flow path 14 in a state where the rotor body 100 is sandwiched between the runner plate 11 and the second mold 16. The first mold body 3 in the runner removing step S140 is separated from the runner plate 11 in a state where the melted resin is poured into the rotor body 100 by the plunger 6.

The runner sweeping plate 8 in the runner removing step S140 is separated from the runner plate 11 in a state where the rotor body 100 is sandwiched between the first mold body 3 and the second mold 16. The runner sweeping plate 8 is separated from the mounting plate 4 while being separated from the runner plate 11.

When the runner plate 11 is separated from the first mold body 3 including the resin pot 5, the flow path 14 opens toward the first mold body 3. The runner R having solidified as one lump with the resin in the resin pot 5 is pulled out from the flow path 14 toward the first mold body 3 as the first mold 2 is separated. At the same time, the runner R is separated from the rotor body 100. When the runner sweeping plate 8 is separated from the mounting plate 4, the runner R engaged with the reverse tapered portion 5c of the resin pot 5 is removed from the resin pot 5. This enables improvement in productivity when a rotor is manufactured using the rotor manufacturing apparatus 1.

### (Other embodiments)

While the embodiment of the present invention has been described above, the above embodiment is merely an example for implementing the present invention. Thus, the present invention is not limited to the embodiment described above, and the embodiment described above may be appropriately modified and implemented without departing from the scope of the present invention.

In the above embodiment, the resin pot 5 is provided at its end portion close to the runner plate 11 with the reverse tapered portion 5c for engaging the runner R. In accordance with the invention, the resin pot 5 has a portion in a shape of a groove in the circumferential direction on the outer peripheral surface of the resin pot 5 that allows melted resin to flow and solidify around the portion.

In the above embodiment, the runner plate 11 has the flow path body, and the first gate plate 12 and the second gate plate 13 each have the resin outlet. Alternatively, the runner plate may have the flow path body and the resin outlets. The runner plate has a recess in a circular shape constituting the flow path body, and a plurality of through-holes constituting the resin outlets.

In the above embodiment, the first mold body 3 includes the first gate plate 12 and the second gate plate 13. Alternatively, the first mold body 3 may include three or more gate plates. In this case, the first mold body includes a first gate plate located nearest to the first mold body, a second gate plate located nearest to the rotor body, and one or more gate plates located between the first gate plate and the second gate plate.

In the above embodiment, the runner plate 11 is composed of a single tabular member. Alternatively, the runner plate may be composed of a plurality of split The invention is set out in the appended tabular members. set of claims.

### Industrial Applicability

The present invention is applicable to a rotor manufacturing apparatus for manufacturing a rotor including a magnet fixed with resin.

### Reference Signs List

- 1: rotor manufacturing apparatus
- 2: first mold
- 3: first mold body
- 4: mounting plate
- 5: resin pot
- X: resin accommodating space
- 6: plunger
- 7: guide shaft
- 8: runner sweeping plate
- 8b: resin pot insertion hole
- 8c: runner cover
- 9: heater
- 10: runner-plate holding plate
- 10b: runner cover insertion hole
- 11: runner plate
- 11a: circular portion
- 11b: groove
- 12: first gate plate
- 13: second gate plate
- 14: flow path
- 15: guide rail
- 16: second mold
- 100: rotor body
- 101: shaft hole
- 102: accommodating hole
- 103: magnet

## Claims

1. A rotor manufacturing apparatus (1) configured to manufacture a rotor including a magnet (103) and a rotor body (100) in a cylindrical shape having an accommodating hole (102) for accommodating the magnet (103), the magnet (103) being fixed with resin in the accommodating hole (102), the rotor manufacturing apparatus (1) comprising:
a first mold (2) provided with a resin pot (5) having opposite ends with respective opening portions (5a, 5b);
a plunger (6) that is located in the resin pot (5) and is movable from one of the opening portions (5a, 5b) of the resin pot (5) toward the other; and
a second mold (16) on which the rotor body (100) is mounted and that is located facing the first mold (2),
the first mold (2) including
a first mold body (3) having the resin pot (5),
a runner plate (11) in a tabular shape located between the first mold body (3) and the second mold (16) while being allowed to separate from the first mold body (3) in a thickness direction, the runner plate (11) having a recess located on a side in contact with the first mold body (3), the recess constituting a part of a flow path (14) for allowing the resin melted to flow, and
a resin accommodating space (X) surrounded by the resin pot (5), the plunger (6), and the recess to accommodate melted resin in a state where the first mold body (3) and the runner plate (11) are in contact with each other,
the flow path (14) communicating with the resin accommodating space (X) in a state where the first mold body (3) and the runner plate (11) are in contact with each other, **characterised by** that
the resin pot (5) has a portion in a shape of a groove in the circumferential direction on the outer peripheral surface of the resin pot (5) that allows melted resin to flow and solidify around the portion.

2. The rotor manufacturing apparatus (1) according to claim 1, **characterized in that**
the first mold body (3) includes
a mounting plate (4) having the resin pot (5), and
a runner sweeping plate (8) located between the mounting plate (4) and the runner plate (11) and having a resin pot insertion hole (8b) into which the resin pot (5) is to be inserted, the runner sweeping plate (8) being allowed to separate from both the mounting plate (4) and the runner plate (11) in the thickness direction in a state where the resin pot (5) is inserted into the resin pot insertion hole (8b), and
the first mold (2) covers the recess of the runner plate (11) with an end portion, close to the runner plate (11), of the resin pot (5) and the runner sweeping plate (8) in a state where the mounting plate (4) is in contact with the runner sweeping plate (8) and the runner sweeping plate (8) is in contact with the runner plate (11).

3. The rotor manufacturing apparatus (1) according to any one of claims 1 and 2, **characterized in that**
the runner plate (11) is configured to sandwich the rotor body (100) mounted on the second mold (16) with the second mold (16) while being in contact with the first mold body (3),
the plunger (6) is configured to extrude the melted resin in the resin pot (5) into the flow path (14) in a state where the rotor body (100) is sandwiched between the runner plate (11) and the second mold (16), and
the first mold body (3) is configured to be separated from the runner plate (11) in a state where the melted resin is poured into the rotor body (100) by the plunger (6) .

4. The rotor manufacturing apparatus (1) according to claim 2, **characterized in that**
the runner plate (11) is configured to sandwich the rotor body (100) mounted on the second mold (16) with the second mold (16) while being in contact with the first mold body (3),
the plunger (6) is configured to extrude the melted resin in the resin pot (5) into the flow path (14) in a state where the rotor body (100) is sandwiched between the runner plate (11) and the second mold (16), and
the runner sweeping plate (8) is configured to separate from the runner plate (11) in a state where the rotor body (100) is sandwiched between the runner plate (11) and the second mold (16), and to separate from the mounting plate (4) while separating from the runner plate (11).

5. The rotor manufacturing apparatus (1) according to any one of claims 1 to 4, **characterized in that**
the runner plate (11) has another recess that is further recessed from the recess and that is provided in a range overlapping the resin accommodating space (X) when viewed in the thickness direction of the runner plate (11).

6. The rotor manufacturing apparatus (1) according to any one of claims 1 to 5, **characterized in that**
the flow path (14) includes a flow path body having an upstream side communicating with the resin accommodating space (X) of the resin pot (5), and a resin outlet located on a downstream of the flow path body,
the runner plate (11) includes a plurality of flat gate plates (12, 13) each having a through-hole (12a, 13a) passing through the flat gate plate (12, 13) in the thickness direction, and is detachable from the first mold body (3),
the plurality of gate plates (12, 13) are located opposite to a surface, in contact with the first mold body (3), of the runner plate (11), in the thickness direction while being stacked in the thickness direction,
the flow path body includes the other recess of the runner plate (11), and
the resin outlet includes the through-holes (12a, 13a) of the respective gate plates (12, 13), communicating with each other in a state where the plurality of gate plates (12, 13) are stacked in the thickness direction.

7. The rotor manufacturing apparatus (1) according to claim 6, **characterized in that**
the runner plate (11) has a through-hole passing through the runner plate (11) in the thickness direction, and
the flow path body includes the through-hole.

## Patentansprüche

1. Eine Rotorherstellungsvorrichtung (1), die dazu konfiguriert ist, einen Rotor herzustellen, der einen Magneten (103) und einen Rotorkörper (100) in einer zylindrischen Form umfasst, welcher ein Aufnahmeloch (102) zum Aufnehmen des Magneten (103) aufweist, wobei der Magnet (103) mit Harz in dem Aufnahmeloch (102) befestigt ist, wobei die Rotorherstellungsvorrichtung (1) folgende Merkmale aufweist:
eine erste Form (2), die mit einem Harztopf (5) versehen ist, der gegenüberliegende Enden mit jeweiligen Öffnungsabschnitten (5a, 5b) aufweist;
einen Kolben (6), der in dem Harztopf (5) angeordnet ist und von einem der Öffnungsabschnitte (5a, 5b) des Harztopfs (5) zu dem anderen hin bewegbar ist; und
eine zweite Form (16), an der der Rotorkörper (100) montiert ist und die der ersten Form (2) zugewandt angeordnet ist,
wobei die erste Form (2) Folgendes umfasst:
einen ersten Formkörper (3), der den Harztopf (5) aufweist,
eine Laufplatte (11) in einer tafelartigen Form, die zwischen dem ersten Formkörper (3) und der zweiten Form (16) angeordnet ist, während sie sich von dem ersten Formkörper (3) in einer Dickenrichtung trennen kann, wobei die Laufplatte (11) eine Aussparung aufweist, die an einer Seite in Kontakt mit dem ersten Formkörper (3) angeordnet ist, wobei die Aussparung einen Teil eines Strömungswegs (14) bildet, um zu ermöglichen, dass das geschmolzene Harz strömt, und
einen Harzaufnahmeraum (X), der von dem Harztopf (5), dem Kolben (6) und der Aussparung umgeben ist, um geschmolzenes Harz in einem Zustand aufzunehmen, in dem der erste Formkörper (3) und die Laufplatte (11) miteinander in Kontakt sind,
wobei der Strömungsweg (14) mit dem Harzaufnahmeraum (X) in einem Zustand kommuniziert, in dem der erste Formkörper (3) und die Laufplatte (11) miteinander in Kontakt sind, **dadurch gekennzeichnet, dass**
der Harztopf (5) einen Abschnitt mit einer Form einer Rille in der Umfangsrichtung auf der äußeren peripheren Oberfläche des Harztopfes (5) aufweist, der es ermöglicht, dass geschmolzenes Harz um den Abschnitt herum fließt und sich verfestigt.

2. Die Rotorherstellungsvorrichtung (1) gemäß Anspruch 1, **dadurch gekennzeichnet, dass**
der erste Formkörper (3) Folgendes umfasst:
eine Montageplatte (4), die den Harztopf (5) aufweist, und
eine Laufüberstreichplatte (8), die zwischen der Montageplatte (4) und der Laufplatte (11) angeordnet ist und ein Harztopfeinsetzloch (8b) aufweist, in das der Harztopf (5) einzusetzen ist, wobei die Laufüberstreichplatte (8) sich sowohl von der Montageplatte (4) als auch von der Laufplatte (11) in der Dickenrichtung in einem Zustand trennen kann, in dem der Harztopf (5) in das Harztopfeinsetzloch (8b) eingesetzt ist, und
die erste Form (2) die Aussparung der Laufplatte (11) mit einem Endabschnitt, nahe der Laufplatte (11), des Harztopfs (5) und der Laufüberstreichplatte (8) in einem Zustand abdeckt, in dem die Montageplatte (4) mit der Laufüberstreichplatte (8) in Kontakt ist und die Laufüberstreichplatte (8) mit der Laufplatte (11) in Kontakt ist.

3. Die Rotorherstellungsvorrichtung (1) gemäß einem der Ansprüche 1 und 2, **dadurch gekennzeichnet, dass**
die Laufplatte (11) dazu konfiguriert ist, den Rotorkörper (100), der an der zweiten Form (16) montiert ist, mit der zweiten Form (16) sandwichartig zu umgeben, während sie mit dem ersten Formkörper (3) in Kontakt ist,
der Kolben (6) dazu konfiguriert ist, das geschmolzene Harz in dem Harztopf (5) in den Strömungsweg (14) in einem Zustand zu extrudieren, in dem der Rotorkörper (100) zwischen der Laufplatte (11) und der zweiten Form (16) sandwichartig umgeben ist, und
der erste Formkörper (3) dazu konfiguriert ist, von der Laufplatte (11) in einem Zustand getrennt zu sein, in dem das geschmolzene Harz durch den Kolben (6) in den Rotorkörper (100) gegossen wird.

4. Die Rotorherstellungsvorrichtung (1) gemäß Anspruch 2, **dadurch gekennzeichnet, dass**
die Laufplatte (11) dazu konfiguriert ist, den Rotorkörper (100), der an der zweiten Form (16) montiert ist, mit der zweiten Form (16) sandwichartig zu umgeben, während sie mit dem ersten Formkörper (3) in Kontakt ist,
der Kolben (6) dazu konfiguriert ist, das geschmolzene Harz in dem Harztopf (5) in den Strömungsweg (14) in einem Zustand zu extrudieren, in dem der Rotorkörper (100) zwischen der Laufplatte (11) und der zweiten Form (16) sandwichartig umgeben ist, und
die Laufüberstreichplatte (8) dazu konfiguriert ist, sich von der Laufplatte (11) in einem Zustand zu trennen, in dem der Rotorkörper (100) zwischen der Laufplatte (11) und der zweiten Form (16) sandwichartig umgeben ist, und sich von der Montageplatte (4) zu trennen, während sie sich von der Laufplatte (11) trennt.

5. Die Rotorherstellungsvorrichtung (1) gemäß einem der Ansprüche 1 bis 4, **dadurch gekennzeichnet, dass**
die Laufplatte (11) eine weitere Aussparung aufweist, die weiter von der Aussparung ausgespart ist und die in einem Bereich vorgesehen ist, der den Harzaufnahmeraum (X) überlappt, wenn sie in der Dickenrichtung der Laufplatte (11) betrachtet wird.

6. Die Rotorherstellungsvorrichtung (1) gemäß einem der Ansprüche 1 bis 5, **dadurch gekennzeichnet, dass**
der Strömungsweg (14) einen Strömungswegkörper, der eine stromaufwärtige Seite aufweist, die mit dem Harzaufnahmeraum (X) des Harztopfs (5) kommuniziert, und einen Harzauslass umfasst, der an einer stromabwärtigen Seite des Strömungswegkörpers angeordnet ist,
die Laufplatte (11) eine Mehrzahl von flachen Torplatten (12, 13) umfasst, die jeweils ein Durchgangsloch (12a, 13a) aufweisen, das durch die flache Torplatte (12, 13) in der Dickenrichtung verläuft, und von dem ersten Formkörper (3) abnehmbar ist,
die Mehrzahl von Torplatten (12, 13) gegenüber einer Oberfläche, die mit dem ersten Formkörper (3) in Kontakt ist, der Laufplatte (11) in der Dickenrichtung angeordnet sind, während sie in der Dickenrichtung gestapelt sind,
der Strömungswegkörper die andere Aussparung der Laufplatte (11) umfasst, und
der Harzauslass die Durchgangslöcher (12a, 13a) der jeweiligen Torplatten (12, 13) umfasst, die miteinander in einem Zustand kommunizieren, in dem die Mehrzahl von Torplatten (12, 13) in der Dickenrichtung gestapelt sind.

7. Die Rotorherstellungsvorrichtung (1) gemäß Anspruch 6, **dadurch gekennzeichnet, dass**
die Laufplatte (11) ein Durchgangsloch aufweist, das durch die Laufplatte (11) in der Dickenrichtung verläuft, und
der Strömungswegkörper das Durchgangsloch umfasst.

## Revendications

1. Appareil de fabrication de rotor (1) configuré pour fabriquer un rotor comportant un aimant (103) et un corps de rotor (100) de forme cylindrique présentant un trou de réception (102) destiné à recevoir l'aimant (103), l'aimant (103) étant fixé par de la résine dans le trou de réception (102), l'appareil de fabrication de rotor (1) comprenant:
un premier moule (2) pourvu d'un pot de résine (5) présentant des extrémités opposées avec des parties d'ouverture respectives (5a, 5b);
un piston (6) qui est situé dans le pot de résine (5) et qui est déplaçable de l'une des parties d'ouverture (5a, 5b) du pot de résine (5) vers l'autre; et
un deuxième moule (16) sur lequel est monté le corps de rotor (100) et qui est situé face au premier moule (2),
le premier moule (2) comportant
un premier corps de moule (3) présentant le pot de résine (5),
une plaque de roulement (11) de forme tubulaire située entre le premier corps de moule (3) et le deuxième moule (16) tout en pouvant se séparer du premier corps de moule (3) dans une direction de l'épaisseur, la plaque de roulement (11) présentant un évidement situé d'un côté en contact avec le premier corps de moule (3), l'évidement constituant une partie d'un trajet de circulation (14) pour permettre à la résine fondue de circuler, et
un espace de réception de résine (X) entouré par le pot de résine (5), le piston (6) et l'évidement destiné à recevoir la résine fondue dans un état où le premier corps de moule (3) et la plaque de roulement (11) sont en contact l'un avec l'autre,
le trajet de circulation (14) communiquant avec l'espace de réception de résine (X) dans un état dans lequel le premier corps de moule (3) et la plaque de roulement (11) sont en contact l'un avec l'autre,
**caractérisé par le fait que** le pot de résine (5) présente une partie en forme de rainure dans la direction circonférentielle sur la surface périphérique extérieure du pot de résine (5) qui permet à la résine fondue de circuler et de se solidifier autour de la partie.

2. Appareil de fabrication de rotor (1) selon la revendication 1, **caractérisé par le fait que**
le premier corps de moule (3) comporte
une plaque de montage (4) présentant le pot de résine (5), et
une plaque de balayage de plaque de roulement (8) située entre la plaque de montage (4) et la plaque de roulement (11) et présentant un trou d'insertion de pot de résine (8b) dans lequel doit être inséré le pot de résine (5), la plaque de balayage de plaque de roulement (8) pouvant se séparer tant de la plaque de montage (4) que de la plaque de roulement (11) dans la direction de l'épaisseur dans un état où le pot de résine (5) est inséré dans le trou d'insertion de pot de résine (8b), et
le premier moule (2) recouvre l'évidement de la plaque de roulement (11) par une partie d'extrémité, proche de la plaque de roulement (11), du pot de résine (5) et de la plaque de balayage de plaque de roulement (8) dans un état où la plaque de montage (4) est en contact avec la plaque de balayage de plaque de roulement (8) et la plaque de balayage de plaque de roulement (8) est en contact avec la plaque de roulement (11).

3. Appareil de fabrication de rotor (1) selon l'une quelconque des revendications 1 et 2, **caractérisé par le fait que**
la plaque de roulement (11) est configurée de manière à prendre en sandwich le corps de rotor (100) monté sur le deuxième moule (16) avec le deuxième moule (16) tout en étant en contact avec le premier corps de moule (3),
le piston (6) est configuré pour extruder la résine fondue dans le pot de résine (5) vers le trajet de circulation (14) dans un état où le corps de rotor (100) est pris en sandwich entre la plaque de roulement (11) et le deuxième moule (16), et
le premier corps de moule (3) est configuré de manière à être séparé de la plaque de roulement (11) dans un état où la résine fondue est versée dans le corps de rotor (100) par le piston (6).

4. Appareil de fabrication de rotor (1) selon la revendication 2, **caractérisé par le fait que**
la plaque de roulement (11) est configurée pour prendre en sandwich le corps de rotor (100) monté sur le deuxième moule (16) avec le deuxième moule (16) tout en étant en contact avec le premier corps de moule (3),
le piston (6) est configuré pour extruder la résine fondue dans le pot de résine (5) vers le trajet de circulation (14) dans un état où le corps de rotor (100) est pris en sandwich entre la plaque de roulement (11) et le deuxième moule (16), et
la plaque de balayage de plaque de roulement (8) est configurée pour se séparer de la plaque de roulement (11) dans un état où le corps de rotor (100) est pris en sandwich entre la plaque de roulement (11) et le deuxième moule (16), et pour se séparer de la plaque de montage (4) tout en se séparant de la plaque de roulement (11).

5. Appareil de fabrication de rotor (1) selon l'une quelconque des revendications 1 à 4, **caractérisé par le fait que**
la plaque de roulement (11) présente un autre évidement qui est plus en retrait par rapport à l'évidement et qui est prévu dans une plage venant en chevauchement avec l'espace de réception de résine (X), lorsque vu dans la direction de l'épaisseur de la plaque de roulement (11).

6. Appareil de fabrication de rotor (1) selon l'une quelconque des revendications 1 à 5, **caractérisé par le fait que**
le trajet de circulation (14) comporte un corps de trajet de circulation présentant un côté amont communiquant avec l'espace de réception de résine (X) du pot de résine (5), et une sortie de résine située en aval du corps de trajet de circulation,
la plaque de roulement (11) comporte une pluralité de plaques de grille planes (12, 13) présentant, chacune, un trou traversant (12a, 13a) passant à travers la plaque de grille plane (12, 13) dans la direction de l'épaisseur, et est amovible du premier corps de moule (3),
la pluralité de plaques de grille (12, 13) sont situées de manière opposée à une surface, en contact avec le premier corps de moule (3), de la plaque de roulement (11), dans la direction de l'épaisseur tout en étant empilées dans la direction de l'épaisseur,
le corps de trajet de circulation comporte l'autre évidement de la plaque de roulement (11), et
la sortie de résine comporte les trous traversants (12a, 13a) des plaques de grille respectives (12, 13), communiquant entre eux dans un état où la pluralité de plaques de grille (12, 13) sont empilées dans la direction de l'épaisseur.

7. Appareil de fabrication de rotor (1) selon la revendication 6, **caractérisé par le fait que**
la plaque de roulement (11) présente un trou traversant passant à travers la plaque de roulement (11) dans la direction de l'épaisseur, et
le corps de trajet de circulation comporte le trou traversant.
